# EUROPEAN PATENT SPECIFICATION

(11) **EP 2 857 920 B1**
(45) Date of publication and mention of the grant of the patent: **06.07.2016**
(21) Application number: 14185492.7
(22) Date of filing: 19.09.2014
(51) Int. Cl.: G05D 23/02, G05G 5/00, F24D 19/10

(54) **A thermostatic head for a valve**
Thermostatkopf für ein Ventil
Tête thermostatique pour une soupape

(30) Priority: 07.10.2013 IT MI20131655
(43) Date of publication of application: 08.04.2015
(73) Proprietor: Giacomini S.p.A., 28017 San Maurizio d'Opaglio (NO) (IT)
(72) Inventor: Zoppis, Cesare, I-28017 San Maurizio d'Opaglio (NO) (IT); Schianta, Graziano, I-28017 San Maurizio d'Opaglio (NO) (IT)
(74) Representative: Di Bernardo, Antonio

(56) References cited:
- EP-A2- 0 903 525
- DE-C1- 19 946 797
- FR-A1- 2 795 809

## Description

### TECHNICAL FIELD

The present invention refers to a thermostatic head, understood as meaning that it is a thermostatic control device for thermostatizable valves.

### STATE OF THE ART

In the current state of the art, thermostatic heads for thermostatizable valves of heating bodies, such as radiators, heaters for central heating systems and the like are known.

Achieving wellness in a living space (home, offices and the like) includes proper management of the temperature of each single room depending on its intended use; moreover, this aspect also stands beside the, not less important, energy saving, in addition to the normative issue, which in some countries (such as in Italy, for example) requires the installation of devices for the automatic adjustment of the environment temperature in the single rooms or in the single zones having the same use and exposure characteristics.

In fact, it is known that in the different rooms of each living space there exist thermal loads that change over time depending on various factors (e.g. outside temperature, energy internal contributions, solar radiation from windows and so on).

The use of a thermostatic head coupled with a thermostatizable valve adjusting the flow of heat transfer fluid entering a heating body allows, in short, to adjust the heat amount introduced into the environment depending on the temperature of the environment itself, so to maintain, as a result, the temperature of the environment at a value set by the user.

To this purpose, thermostatic heads include a temperature sensor, which is usually a liquid sensor; the temperature variation of the environment causes a consequent volume change of the liquid contained in the sensor, which change causes, in turn, the displacement of an internal mechanism, with consequent closure or aperture of the valve coupled to the device; this, ultimately, generates a modulation of the flow of heat transfer fluid entering the heating body and, then, a variation of the heat amount delivered by the latter.

Thermostatic heads comprise an adjusting handle operable by a user, which allows the adjustment.

The current thermostatic heads not only perform the normal setting of the chosen temperature, but they have also other more advanced features that make them particularly versatile.

Among these features, the most appreciated are those relating to:
- the possibility to block the head in correspondence with the chosen temperature, avoiding that it could be altered (perhaps accidentally), also called "blocking function"
- the possibility to allow a user to operate the head only in a defined range of temperature values (e.g. setting the maximum or the minimum temperature), also called "limiting function".

Known thermostatic heads, provided with these features, are described for example in the Italian Patent applications no. IT1997MI002110 in the name of MACRIFIN Spa or no. IT2002MI000896 in the name of FRACCHIA or in the French Patent application no. FR2795809 in the name of F.W. OVENTROP GmbH & CO.KG. or even in the European Patent application no. EP0694722 in the name of COMAP S.A. or in the German Patent application no. DE19920864 in the name of T.HEIMEIER METALLWERK GmbH & CO.KG..

Incidentally, it is to be noted that the thermostatic heads in general do not contain electronic control components and they must have a cost as low as possible: all the features, even those advanced, must therefore be obtained thanks to particular mechanical couplings.

On the market there also exist thermostatic heads with electronic sensors and motorized actuators, which however have costs and complexity of a level higher than that of the thermostatic heads with manual control to which the invention refers, and that, therefore, are not considered here.

An aspect of particular interest is the realization of the abovementioned limiting function: in order to obtain it, stroke ends stopping the rotation of the adjusting handle in correspondence with chosen values have to be provided: for example in the case of limiting the maximum temperature, the stroke ends stop the rotation of the handle in correspondence with a set (maximum) temperature and allow the rotation of the handle towards a lower temperature (or towards the complete closure); for adjusting the minimum temperature the vice-versa occurs.

To this purpose, mechanical stoke ends that are movable have to be arranged, so to define for the handle the whole angle of the allowed rotation arc.

In the several known solutions illustrated above, such stroke ends are realized in different ways: in some cases (e.g. DE19920864 and FR2795809), they are variously made with movable inserts that get on special seats thus stopping the rotation of the handle.

This solution, which is apparently simple and versatile, has however the drawback that a tool must be operated (e.g. the tip of a small screwdriver) to extract the movable inserts from the seats for setting their position.

Moreover, taking into account the small size of the inserts and that some positions are less accessible once the thermostatic head has been installed, the operation is not easy, especially when the user is not a specialized user (as an installer) but, on the contrary, is a common, not specialized, user.

A simpler solution to be used is that described in EP0694722, wherein the stroke ends are placed on an adjusting ring axially displaceable in engagement/ disengagement conditions with respect to a circular crown of seats.

The axial displacement of the ring frees the rotation thereof and the user can thus set the angular position of the stroke end, so to stop the rotation of the handle in correspondence with a point of interest.

If, however, the setting operation is, all in all, simple, the ring is nevertheless completely removable from the head, with the risk of being lost; if its complete extraction would be prevented, additional processing of the thermostatic head should in any case be provided.

Moreover, in view of the specific arrangement of the elements in this thermostatic head, its operation is not easy, because the portion available for grasping by the user is rather small.

Such problems are solved, for example, by the thermostatic heads described in IT1997MI002110 or IT2002MI000896, wherein the adjusting ring is placed in correspondence with the head portion facing towards the valve, and is thus not completely removable from the head, when the same is installed on the valve.

In these solutions, furthermore, the handle operable by the user has significant dimensions, so that its operation is facilitated.

However, even these solutions have some drawbacks, mainly due to the fact that to move from one function or setting to another different one, the user is forced to rotate the ring in a mandatory direction.

This comes, in short, from the specific arrangement of the component parts of the heads themselves, in which the rotation stops are all made by means of the interaction between two components: the ring and the handle.

### OBJECTS AND SUMMARY OF THE INVENTION

It is an object of the present invention to overcome the drawbacks of the known prior art.

In particular, it is an object of the present invention to provide a thermostatic head for valves being simple to use, not having parts that can be lost, allowing an easy adjustment, also without tools, and having a relatively low cost.

Another object of the invention is to provide an alternative to the known thermostatic heads.

The idea underlying the present invention is to provide a thermostatic head for valves of the type comprising a thermostatic actuator assembly, a nipple for housing the actuator assembly provided with a threaded end and a handle integral with the nipple both in rotation and axially.

The head of the invention, furthermore, comprises a tail threaded at a first end and screw engaged with the threaded end of the nipple, comprising coupling means for fastening to a valve, such as a ring nut or the like.

The head further comprises a synchronizer ring coupled in rotation to the tail and axially to the handle: the synchronizer ring is thus axially movable relative to the tail due to the rotation of the handle, to adjust the operation of the head itself.

According to the invention the handle comprises an opening mouth in correspondence of which a housing channel defined by an external wall and an internal one of the handle opens.

Inside the housing channel there are:
- first abutment surfaces radially extending from the external wall, and
- second abutment surfaces radially extending from the internal wall.

The synchronizer ring is provided with at least one synchronizer tooth intended to abut with the second abutment surfaces to define stroke end angular positions of the handle.

Moreover, according to the invention the head further comprises a limiter ring couplable in rotation to the synchronizer ring selective connection of the former on the latter.

The expression "selective connection" means that the limiter ring and the synchronizer ring can be grafted on each other - thus remaining coupled in rotation - in different mutual angular positions.

The limiter ring is, in its turn, provided with at least two limiter teeth that, when the limiter ring is grafted on the synchronizer ring, are housed in the housing channel and are suitable to abut with said first abutment surfaces arranged therein to alternatively determine either intermediate stroke end positions of the handle or a block condition in rotation of the handle.

In this way, as it will better appear in the detailed explanation given hereinafter, the drawbacks of the known prior art are overcome: the user, in fact, is able to set the stroke ends in a simple and intuitive way, even without tools and without the risk that parts of the head could be lost or that the adjustments could be wrongly altered.

Moreover, in this way, a valid alternative to the known solutions described hereinabove is achieved.

Further advantageous features of the method form the subject of the appended claims that are considered an integral part of the present description.

### BRIEF DESCRIPTION OF THE DRAWINGS

The invention will be described hereinafter with reference to non-limiting examples, given by way of explanatory and non-limiting example in the accompanying drawings. These drawings show different aspects and embodiments of the present invention and, where appropriate, similar reference numerals are used to denote similar structures, components, materials and/or elements in different figures.
Figure 1 shows an exploded view of a thermostatic head of the invention;
Figure 2 shows a sectional view of the head of Fig. 1 in assembled condition;
Figures 3a and 3b show a perspective view and a sectional view, respectively, of a first particular component - the nipple - of the head of the preceding figures;
Figures 4a and 4b show a perspective view and a sectional view, respectively, of a second particular component - the tail - of the head of Figures 1 and 2;
Figures 5a and 5b show a perspective view and a sectional view, respectively, of a third optional particular component - the ring nut - of the head of Figures 1 and 2;
Figures 6a, 6b and 6c show a perspective view, a sectional view and a bottom view, respectively, of a fourth particular component - the handle - of the head of Figures 1 and 2;
Figures 7a and 7b show a perspective view and a sectional view, respectively, of a fifth particular component - the synchronizer ring - of the head of Figures 1 and 2;
Figures 8a and 8b show a perspective view and a sectional view, respectively, of a sixth particular component - the limiter ring - of the head of Figures 1 and 2;
Figure 9 shows a bottom view of an alternative of the particular component of Fig. 6;
Figure 10 shows a sectional view of the head of Figures 1 and 2 in the block condition of the handle;
Figure 11 shows a sectional view of the head of Figures 1 and 2 in the normal operating condition;
Figure 12 and 13 show a sectional view of the head of Figures 1 and 2 in two different stroke end conditions.

### DETAILED DESCRIPTION OF THE INVENTION

While the invention is susceptible of various modifications and alternative constructions, some relevant illustrated embodiments are shown in the drawings and will be described in detail hereinafter.

It should be understood, however, that there is no intention to limit the invention to the specific illustrated embodiment, but, on the contrary, the invention intends to cover all the modifications, alternative constructions and equivalents that fall within the scope of the invention as defined in the claims.

The use of "for example", "etc.", "or" denotes non-exclusive alternatives without limitation, unless otherwise specified.

The use of "comprises" means "comprises, but is not limited to", unless otherwise specified.

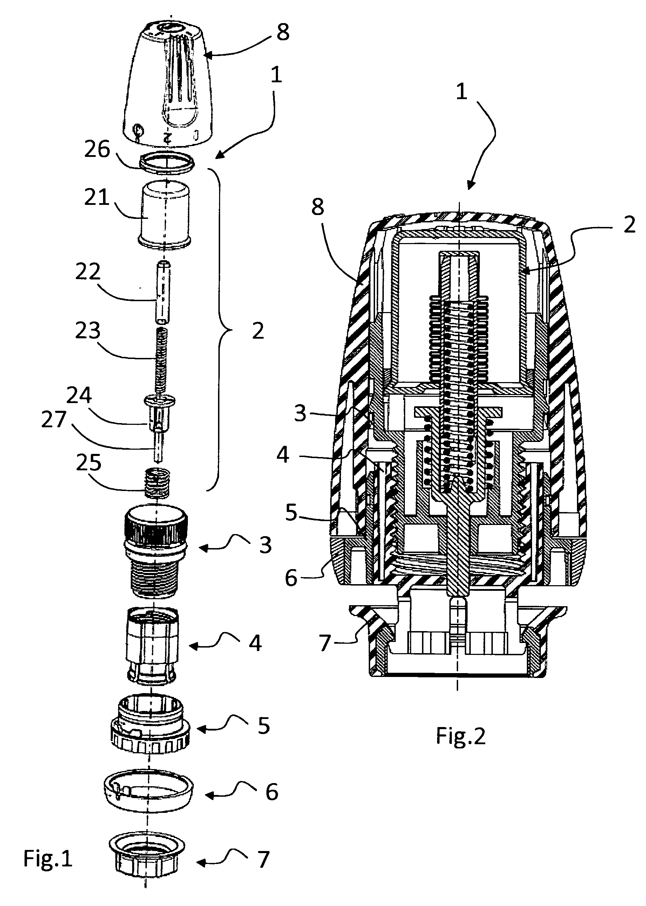

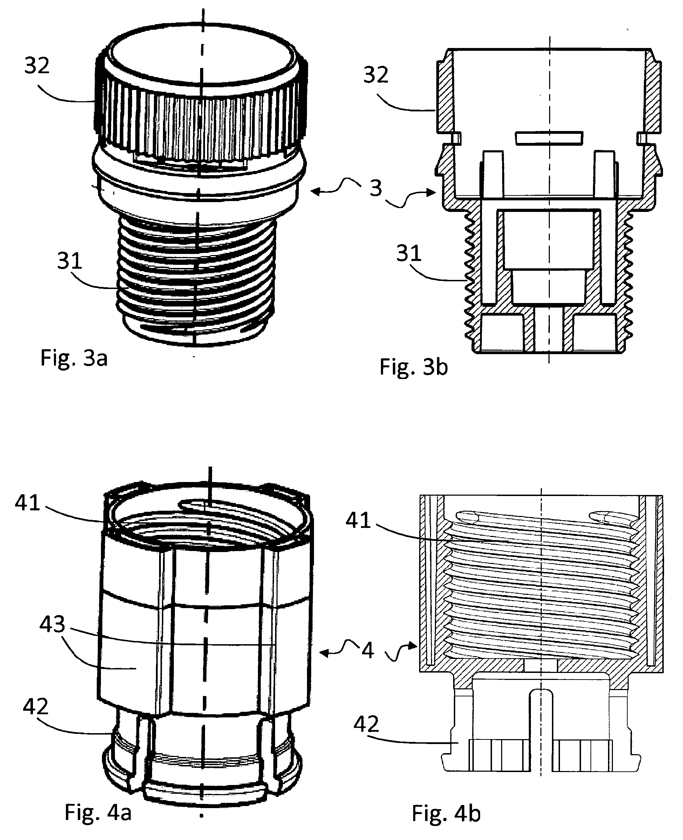

With reference to the appended Figures 1 and 2, a thermostatic head 1 for thermostatizable valves according to the invention is shown therein, while in Figures 3a-8b its components are shown in various views.

The head 1 comprises a thermostatic actuator assembly denoted as a whole with the reference numeral 2.

More in detail the actuator assembly 2, in the non-limiting example given herein, comprises a thermostatic sensor 21, for example of the fluid expansion type, a first bushing 22, a second bushing 24, an elastic element 23.

The first bushing 22 and the second bushing 24 are aligned with each other and coupled by means of the elastic element 23, which in the example is a helical spring.

The second bushing 24 is provided with a pin 27 intended to couple with a jumper control of a thermostatizable valve (not shown) to adjust a flow of heat transfer fluid through the valve itself.

The assembly 2 further comprises a contrast elastic element 25 acting on the second bushing 24 in the opposite direction to the action of the thermostatic sensor 21, for example a spring 25.

Thanks to this arrangement, the thermostatic sensor 21 is operatively associated with the pin 27 through the bushings 22,24 to operate it in the axial direction depending on a temperature variation causing the expansion or contraction thereof.

The more the free tip of the pin 27 protrudes and pushes the valve jumper, the greater will be the head intervention on the valve consequently reducing the flow allowed by this latter.

We do not linger over on the point, because this portion of the head 1 and the operating principle thereof are commonly known to the person skilled in the art and there is not a direct interest as regards the invention itself; it is sufficient to be noted as of now that the just described assembly 2 can be replaced by other equivalent assemblies (for example by wax sensors instead of liquid sensors, or by shapes and dimensions different from those shown in the drawings) without departing from the scope of the present invention.

Coming back to the head 1, it comprises a nipple 3 (also visible in greater detail in Figs. 3a, 3b) for housing the actuator assembly 2.

The nipple 3 has at least a first threaded free end 31 that, in the operating condition, is facing towards the valve.

In the example the nipple 3 also comprises a second cup-shaped free end 32 into which at least the thermostatic sensor 21 and/or part of the assembly 2 is internally housed (in the assembled condition).

The head 1 further comprises a handle 8, which can be operated in rotation by a user to adjust the temperature, on which we will return in detail later on; for now, it is sufficient to be noted that the nipple 3, in the assembled condition, is coupled to the handle 8 both in rotation and for axial movements.

In the given example this is achieved thanks to the fact that the cup-shaped free end 32 is externally provided with an engagement profile - a millerays in the example - cooperating with a similar engagement profile inside the handle 8 - fins in the example - to form a shape coupling to rotation.

The axial coupling between nipple 3 and handle 8 is realized by a series of undercut projections (and/or grooves) axially securing the two (3 and 8).

The head 1 further comprises a central tail 4 (also visible in greater detail in Figs. 4a and 4b) comprising, in its turn, a first threaded free end 41 and a second free end 42 for coupling with the thermostatizable valve.

In the shown example the thread of the first threaded free end 41 is inside the tail (which, therefore, is at least partly hollow) and the thread of the first threaded free end 31 of the nipple 3 is outside this latter: the two threads have the same pitch and are intended to cooperate with each other to allow nipple 3 and tail 4 to screw/unscrew between them; in particular, since the nipple 3 is integral with the handle 8, by operating this latter the nipple 3 is brought in rotation and, in the case the tail 4 is prevented to rotate on itself, the axial displacement of the nipple 3 is carried out thanks to the screw coupling of the two threads 31,41.

Coming back to the tail 4, it further comprises, on its external surface, first guide/slide profiles 43 cooperating with corresponding guide/slide profiles 56 of the synchronizer ring 5, on which we will return shortly.

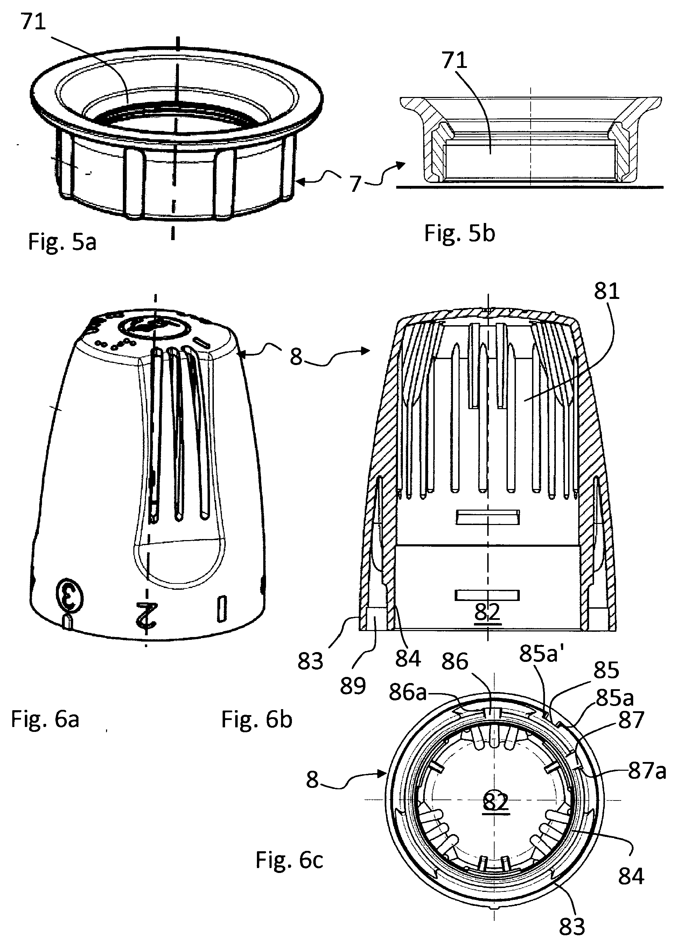

The second free end 42 of the tail 4 is for coupling with the thermostatizable valve and, in the example, it is provided with a seat for housing a ring nut 7 (also visible in greater detail in Figs. 5a, 5b) and with a shape suitable for coupling with the thermostatizable valve: such coupling shape may vary depending on the circumstances and, in any case, it is of a type known to the person skilled in the art, therefore we do not linger over on it.

The ring nut 7 is intended to axially couple with the tail 4 by engaging its end 42 provided with the housing seat and it comprises a threaded portion 71, thanks to which it can be screwed on a corresponding thread of a thermostatizable valve.

Therefore, the ring nut 7 is free to rotate with respect to the tail 4, so that it can be screwed on the valve that, instead, is usually installed on a heating element (radiator and the like), thereby fastening the head 1 to the valve.

It is to be noted that, by means of this fastening, the tail 4 is rigidly fixed to the valve, not being able to rotate/ translate or slip off from this latter.

It should be noted as of now that the engagement of the head 1 with the thermostatizable valve could be obtained with different engagement means, on which we do not linger over because they belong to the common knowledge of the person skilled in the art as mere equivalent solutions of the ring nut 7 so far described by way of non-limiting example.

The ring nut 7 is, therefore, to be considered as an optional component: if other means for coupling the head 1 to the valve were chosen, the ring nut 7 could also be absent.

The handle 8 (also visible in more detail in Figs. 6a, 6b) can be operated by the user and it comprises a hollow body 81 inside which at least part of the sensor assembly 2 can be housed.

The body 81 internally comprises profiles for engagement with the nipple 3 such as, for example, fins cooperating with the millerays of the nipple 3 to form a shape coupling to rotation and one or more projections (or, alternatively, grooves) axially fastening nipple 3 and handle 8 that therefore, once assembled, act as a single piece.

No further details on the fins or on the grooves or projections of the handle are provided herein because the person skilled in the art owns as common knowledge different coupling means between the two (e.g. pins, screws or even other solutions) intended to fix in rotation and translation the two parts (nipple and handle) and that can be equivalently used.

To this purpose, it is also highlighted that - in some alternative embodiments (not shown) - the nipple 3 and the handle 8 are made as a single, monolithic, piece and the space for inserting the assembly 2, for example, is obtained laterally or on the head of the handle, for example with a screwable lid or the like.

According to the invention the handle 8 further comprises an opening mouth 82 facing towards the valve - in the assembled condition - in correspondence of which an external wall 83 and an internal wall 84, which are concentric and define a housing channel 89, are identified.

Given the symmetries involved, the walls 83 and 84 are preferably cylindrical or frusto-conical.

Such channel 89 is open and it can be substantially closed by the limiter ring 6, on which we will return later on.

It is to be noted that the external wall 83 is provided with at least a first radial tooth 85 extending into the housing channel 89 towards the internal wall 84 from the external one 83.

The opposite radial faces of the tooth 85 form first abutment surfaces 85a and 85a'.

In the example the radial tooth 85 ends before the internal wall 84, from which it is therefore separated; in other solutions the first radial tooth 85 lengthens until touching the internal wall 84.

The fact of keeping the radial tooth 85 at a certain distance from the internal wall 84, however, has some advantages in the manufacturing stage, since the thicknesses involved could cause defects due to undesirable shrinkages when the component is made through molding and/or hot casting processes.

The internal wall 84, in its turn, is provided with second abutment surfaces 86a and 87a that, in the example, are the opposite faces of a second radial tooth 86 and a third radial tooth 87 respectively, which also extend in the housing channel 89 towards the external wall 83 from the internal one 84.

In the example the radial teeth 86,87 end before the external wall 83, from which they are therefore separated.

More in detail, the radial distance between the first radial tooth 85 and the internal wall 84 is equal to or greater than the radial extension of the radial teeth 86,87 and, similarly, the radial distance between the radial teeth 86,87 and the external wall 83 is equal to or greater than the radial extension of the first radial tooth 85.

It is to be noted that in an alternative embodiment (not shown) there only exists one second radial tooth 86: in this case the second abutment surfaces 86a and 87a are the opposite faces of the same single tooth 86; the operation is however similar to what described later on.

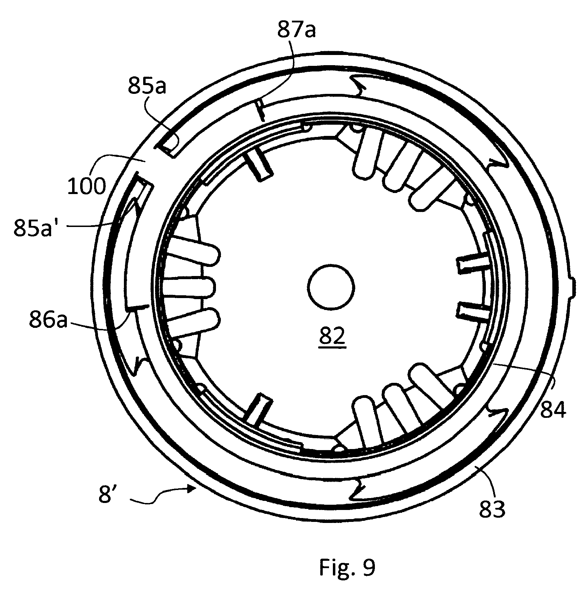

Moreover, the same functions can be also achieved by replacing the three radial teeth 85, 86, 87 with a single protrusion allowing to obtain the first and the second abutment surfaces 85a, 85a', 86a and 87a all formed on the same protrusion 100, as shown in Fig. 9, that extends into the channel 89 and that, in this embodiment, connects the internal wall 84 with the external one 83.

In this variant of the handle, denoted with 8', the single protrusion 100 forms all the abutment surfaces 85a, 85a', 86a and 87a of the teeth 85,86,87.

In other words, in the variant 8' teeth 85,86,87 are joined together and monolithic, without that this changes the operation described in the case wherein teeth 85,86,87 are separated from each other or wherein only two teeth 85,86 are provided.

Returning to the illustrated example, on the external wall of the handle 8, preferably around the opening mouth 82, a reference graduated scale and symbols to indicate the operation to the user are present.

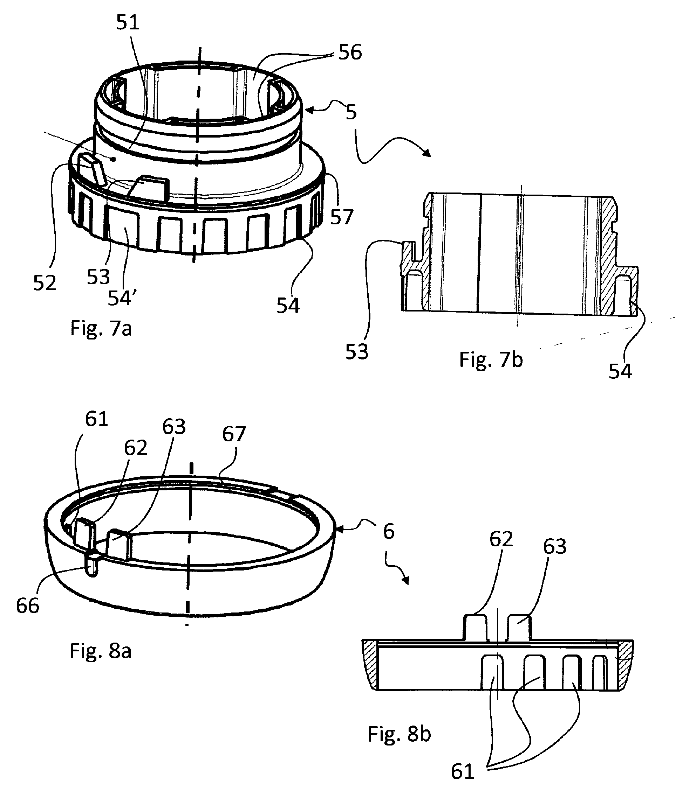

The head 1 further comprises a synchronizer ring 5 (also visible in greater detail in Figs. 7a and 7b).

The synchronizer ring 5 is suitable to be grafted on the handle 8 thanks to a circumferential groove 51 engaging a corresponding circumferential ridge of the handle 8: in this way, once the synchronizer ring 5 and handle 8 are grafted (assembled), they are axially integral, but the handle 8 is free to freely rotate with respect to the synchronizer ring 5.

In the shown example three circumferential ridges, arranged at 120° from each other, are provided.

The synchronizer ring 5 is also provided with an external engagement crown 54 provided with radial depressions to engage in rotation with a limiter ring 6 on which we will return later on; these radial depressions have all but one the same dimensions: there only exists one bigger radial depression 54' that, instead, has a bigger extension and performs a centering function, on which we will return afterwards.

It is highlighted as of now that the bigger radial depression 54' is absent in some embodiments, the radial depressions being all substantially equal among them.

In correspondence with the engagement crown 54, furthermore, an engagement lip 57 axially retaining the limiter ring 6 is provided.

The synchronizer ring 5 internally comprises guide/slide profiles 56 intended to slidingly engage with those 43 of the tail 4: in this way a rotation of the handle 8 brings the nipple 3 to rotate and generates an axial displacement of the handle with relative nipple 3 and of the synchronizer ring 5, which are made to go near to or to go away from the valve to allow the operation adjustment of the head 1.

In order to facilitate the manufacturing processes associated with the calibration and the assembly of the components and to ensure a proper coupling with some models of thermostatizable valves, in certain embodiments of the invention the coupling between the synchronizer ring 5 and the tail 4 is angularly preset: the tail 4 can only graft on the synchronizer ring 5 in a certain position; to this purpose, the guide/slide profiles 56 and 43 are shaped so as to allow the tail 4 to insert into the synchronizer ring 5 only in coincidence of a certain mutual angle of the two.

The synchronizer ring 5 is further provided with synchronizer teeth 52,53, in the example two teeth are provided, suitable to penetrate into the channel 89 in the assembled condition.

The synchronizer teeth 52,53 are mutually spaced and protrude in the axial direction.

During operation the synchronizer teeth 52,53 are intended to come into contact with one of said second and third radial tooth 86,87, alternately, following a rotation of the handle 8, or, more generally, with a second abutment surface 86a, 87a: each of the synchronizer teeth 52,53 and the radial ones 86,87 develops, at least in part, on isocentric circumferences of equal radius, so as to abut following a mutual rotation of ring 5 and handle 8.

The head 1 further comprises a limiter ring 6 (also visible in greater detail in Fig. 8).

The limiter ring 6 can be selectively grafted on the synchronizer ring 5, i.e. it can be grafted in a plurality of angles and therein fixed once grafted: by fixing the two, once grafted, they result integral in rotation and axially.

To make the limiter ring 6 to rotate with respect to the synchronizer ring 5, it is therefore necessary firstly removing the former from the latter, rotating it and, then, re-grafting it on the latter blocking it in rotation.

To this purpose, the limiter ring 6 comprises internal radial projections 61 suitable to engage with the radial depressions of the crown 54 of the synchronizer ring 5, so as to constrain the limiter ring 6 and the synchronizer ring 5 to each other in rotation.

The axial fixing between the limiter ring 6 and the synchronizer ring 5 is obtained through the lip 57 cooperating with the circumferential seat 67 of the limiter ring 6, thus realizing a removable coupling (in the sense that the two can be grafted/ungrafted by applying a certain strength).

Also in this case other solutions are available to the person skilled in the art who should select a removable coupling, all equivalent to what described so far.

The limiter ring 6 also comprises two limiter teeth 62,63 suitable to be housed in the channel 89 in the assembled condition.

The limiter teeth 62,63 axially protrude from the body of the ring 6 and they are spaced from each other; they are suitable to come into contact alternately - the one or the other - or both with the first radial tooth 85 following a rotation of the handle 8, or, more generally, with the first abutment surfaces 85a' and 85a.

Each of the limiter teeth 62,63 and the first radial tooth 85 develops, at least in part, on isocentric circumferences of equal radius, so as to abut following a mutual rotation between the limiter ring 6 and the synchronizer ring 5.

In this way the synchronizer teeth 52,53 and the limiter ones 62,63, variously cooperating with the radial teeth 85,86,87 of the handle 8 (or, equivalently, with the abutment surfaces 85a, 85a', 86a and 87a), define stroke end angular positions and/or intermediate stroke end angular positions of the handle 8 corresponding to different modes of use or function, which will be described shortly.

The limiter ring 6 further comprises a reference 66 in the form of a radial protrusion or of a simple character printed on it, in correspondence with a point between the two limiter teeth 62,63 chosen on the circumferential arc developing for a minimum angle.

The operation of the head 1 just described is exposed herein after; for a more correct understanding of the invention, the different functions of the head 1 are described separately.

### - Normal operation -

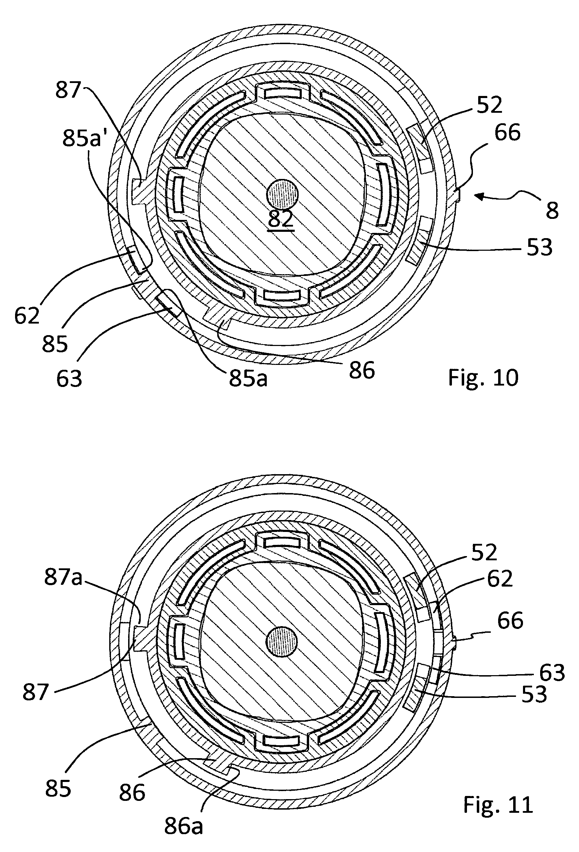

In this function, shown in a sectional view in Fig. 11, the thermostatic head 1 can be adjusted in any positions between the position of "shut-off" or shutdown with which the mechanical block of the head, and the consequent complete closure of the valve, is performed (in this condition the head does not intervene, whatever the temperature change be, and it maintains the complete closure of the valve), usually denoted with "0" on the handle 8, and a maximum aperture (denoted with a symbol, for example a sun) ensuring the maintenance of the set temperature.

In this operating condition, the limiter ring 6 is placed so that the reference 66 coincides with the space present between the two teeth 52 and 53 of the synchronizer ring 5.

The limiter ring 6 is grafted on the synchronizer ring and the rotation thereof is prevented; the synchronizer ring 5, once the head 1 is mounted, is fixed in position.

In this way the limiter teeth 62,63 are "in phase" with the synchronizer teeth 52,53, which act to delimit the two extreme stroke ends of the rotation angle allowed for the handle 8.

When this condition occurs, the reference 66 of the limiter ring 6 indicates the set temperature corresponding to a point of the scale of the handle 8: the user, by rotating the handle 8, displaces the nipple at a certain distance from the valve control, so that the pin 27 acts more or less on the jumper control of the thermostatizable valve, thus opening it or closing it depending on the temperature.

The extreme stroke ends (corresponding to fully open valve or fully closed valve) of the handle 8 are obtained thanks to the interference of the synchronizer teeth 52,53 with the second and third radial tooth 86 and 87 in the channel 89 (or, more generally, with the second abutment surfaces 86a, 87a): the handle 8, in fact, can be rotated until one of the radial teeth 86 and 87 comes into contact with one of the synchronizer teeth 52,53 (or, more in general, when one of the second abutment surfaces 86a, 87a comes into contact with one of the synchronizer teeth 52,53).

The rotation of the handle 8 is thus stopped in correspondence of a maximum or minimum value of aperture, preventing the user to continue with a rotation detrimental to the head 1.

### - Blocking function-

The blocking function, shown in Fig. 10, allows, once the desired temperature has been set, to prevent the (voluntary or involuntary) rotation of the handle 8.

To activate this function, after having operated on the handle 8 to determine the set temperature (see "normal operation" above), the limiter ring 6 is ungrafted from engagement with the synchronizer ring 5, in order to free the unconstrained rotation thereof: this operation provides to axially move the limiter ring 6 by distancing it from the handle 8 until disengaging the lip 57 from the circumferential seat 67.

The limiter ring 6 is then rotated until its reference 66 coincides with an appropriate block symbol (e.g. a padlock) on the handle 8, placed in correspondence with the first tooth 85 (or, more in general, with the first abutment surfaces 85a, 85a') and re-grafted on the synchronizer ring 5 in this position.

In this way the two limiter teeth 62,63 are located over the first tooth 85 - in the channel 89 - (or, more generally, in contact with or immediately next to the first abutment surfaces 85a, 85a'), thus blocking the rotation of the handle 8.

### - Limiting function -

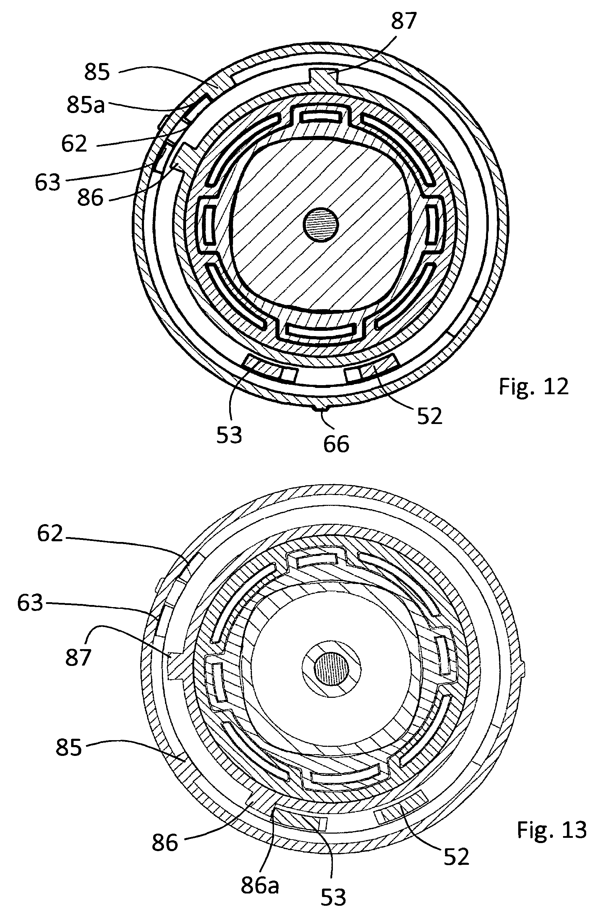

The description of this function, shown in Figs. 12 and 13 in correspondence with two stroke end points, is particularly useful for understanding the invention.

With this function, in short, the adjusting range of the head 1 is narrowed by moving the rotation stroke ends of the handle 8 at intermediate preset angular positions among the stroke ends ones arranged through the interaction between the synchronizer teeth 52, 53 and the radial teeth 86,87 (or, more generally, between the synchronizer teeth 52, 53 and the second abutment surfaces 86a, 87a).

The intermediate angular positions correspond to given temperature ranges that can be set by the user starting from any initial setting of the thermostatic head 1.

In practice, it is possible to set the head 1 so that the set temperature can only be reduced or can only be increased, by keeping the set value as a fixed point.

In this case firstly a temperature value is set, acting as described for the "normal operation" just above: such temperature value coincides with the fixed point, or with the setting of the new, intermediate, stroke end point.

To this purpose, the limiter ring 6 is ungrafted from engagement with the synchronizer ring 5, in order to free the unconstrained rotation thereof: this operation provides to axially move the limiter ring 6 by distancing it from the handle 8 until disengaging the lip 57 from the circumferential seat 67.

The limiter ring 6 is then rotated so as to bring its reference 66 immediately at the right or at the left of the radial tooth 85, positions, these latter, that can be indicated with arrows or similar symbols denoting the chosen operation: so doing, one of limiter teeth 62,63 abuts on the radial tooth 85 itself (or, more generally, on a first abutment surface 85a, 85a'); in this way an - intermediate - stroke end point of the handle 8 is defined, in a direction of rotation or in the opposite direction, depending on the tooth 62,63 that abuts, thus obtaining the aforesaid intermediate stroke end; in Fig. 12 a stroke end point is shown in which the tooth 62 abuts on the first abutment surface 85a of the radial tooth 85.

The limiter ring 6 is then re-grafted on the synchronizer ring 5 for blocking the corresponding rotation.

It is to be noted that the fact that the limiter ring 6 is free, it allows to advantageously rotate it in both directions to reach the desired position thereby achieving a high simplicity of use and versatility of the head 1.

In practice, depending on the position of the reference 66 (and, therefore, of the limiter teeth 62,63) with respect to the first radial tooth 85 (or, more generally, with respect to the first abutment surfaces 85a, 85a'), the rotation of the handle 8 is limited, by stroke ends formed, in one direction, by the limiter tooth 62 or 63 that abuts on the first radial tooth 85 (or, more in general, on the first abutment surfaces 85a, 85a'), while in the opposite direction by a synchronizer tooth 52,53 thatabuts on one of the second and third radial tooth 86,87 (or, more generally, on the second abutment surfaces 86a and 87a).

This second condition is shown in Fig. 13 in which the synchronizer tooth 53 is shown in abutment on the second abutment surface 86a of the tooth 86.

The objects set out above are so achieved.

## Claims

1. A thermostatic head (1) for valves, comprising:
- a thermostatic actuator assembly (2)
- a nipple (3) for housing the actuator assembly (2) provided with at least a threaded end (31)
- a handle (8) integral with the nipple (3) both in rotation and axially
- a tail (4) threaded at a first end and screw engaged with the threaded end of the nipple (3) at said first end, comprising coupling means for fastening to a valve
- a synchronizer ring (5) coupled in rotation to the tail (4) and axially to the handle (8), the synchronizer ring (5) being axially movable relative to the tail (4) due to the rotation of the handle (8),
wherein said handle (8) further comprises an opening mouth (82) and an external wall (83) and an internal wall (84) ending at said opening mouth (82), which define a housing channel (89),**characterized in that** in said housing channel there are provided:
- first abutment surfaces (85a,85a') radially extending in said housing channel (89) from said external wall (83)
- second abutment surfaces (86a,87a) radially extending in said housing channel (89) from said internal wall (84),
said synchronizer ring (5) being provided with at least one synchronizer tooth (52,53) intended to abut at least with said second abutment surfaces (86a,87a) to define stroke end angular positions of the handle (8) and **in that**
the head (1) further comprises a limiter ring (6) couplable in rotation to said synchronizer ring (5) through selective connection of the former on the latter, said limiter ring (6) being provided with at least two limiter teeth (62,63) that, when the limiter ring (6) is connected on said synchronizer ring (5), are housed in said housing channel (89) and are intended to abut with said first abutment surfaces (85a,85a') to alternatively determine either intermediate stroke end positions of the handle (8) or a lockout condition in rotation of the handle (8).

2. A thermostatic head (1) according to claim 1, wherein said first abutment surfaces (85a,85a') are formed on opposite sides of a first radial tooth (85) protruding from said external wall (83).

3. A thermostatic head (1) according to claim 1 or 2, wherein said second abutment surfaces (86a,87a) are formed on opposite sides of two radial teeth (86,87) protruding from said internal wall (84).

4. A thermostatic head (1) according to claim 3, wherein a radial distance between the first radial tooth (85) and the internal wall (84) is equal to or greater than the radial extension of the second and/or third radial tooth (86,87) and a radial distance between said second and/or third radial tooth (86,87) and the external wall (83) is equal to or greater than the radial extension of the first radial tooth (85).

5. A thermostatic head (1) according to claim 1, wherein said first abutment surfaces (85a,85a') and said second abutment surfaces (86a,87a) are formed on a single protrusion (100) extending in said channel (89).

6. A thermostatic head (1) according to one or more of the preceding claims, wherein the nipple (3) comprises a second cup-shaped free end (32) into which at least part of said actuator assembly (2) is internally housed.

7. A thermostatic head (1) according to the preceding claim, wherein said cup-shaped free end (32) is externally provided with an engagement profile cooperating with a similar engagement profile inside the handle (8) to form a shape coupling to the rotation and to the translation.

8. A thermostatic head (1) according to one or more of claims 1 to 4, wherein the nipple (3) is in one piece with said handle (8).

9. A thermostatic head (1) according to one or more of the preceding claims, wherein said tail (4) comprises a second free end (42) for coupling with the thermostatizable valve, said first end (41) being internally threaded and intended to cooperate with the thread of the first threaded free end (31) of the nipple (3) to allow the nipple (3) and the tail (4) to screw/ unscrew between them.

10. A thermostatic head (1) according to one or more of the preceding claims, wherein said tail (4) further comprises first guide/slide profiles (43) and wherein said synchronizer ring (5) comprises second guide/slide profiles (56), said first and second guide/slide profiles (43,56) being suitable to cooperate between them to guide an axial translation of said synchronizer ring (5) with respect to said tail (4).

11. A thermostatic head (1) according to one or more of the preceding claims, wherein said coupling means for fastening to a valve comprise a ring nut (7) and an engagement profile on said tail (4) for engagement with said ring nut.

12. A thermostatic head (1) according to one or more of the preceding claims, wherein said synchronizer ring (5) is provided with a circumferential groove (51) and said handle (8) is provided with a corresponding circumferential ridge for a mutual axial coupling, said handle (8) being free to rotate with respect to the synchronizer ring (5).

13. A thermostatic head (1) according to one or more of the preceding claims, wherein said synchronizer ring (5) comprises an external engagement crown (54) provided with radial depressions to engage in rotation with a limiter ring (6), to allow a centering of said limiter ring (6), said synchronizer ring (5) being further provided with at least one engagement lip (57) for removably axially retaining the limiter ring (6).

14. A thermostatic head (1) according to one or more of the preceding claims, wherein said thermostatic actuator assembly (2) comprises a thermostatic sensor (21) preferably of the fluid expansion type, a first bushing (22), a second bushing (24), an elastic element (23), preferably a helical spring, coupling said first and said second bushing, said second bushing (24) being provided with a pin (27) intended to couple with a jumper control of a thermostatizable valve to adjust a flow of heat transfer fluid through the valve itself.

## Patentansprüche

1. Thermostatkopf (1) für Ventile, welcher Folgendes umfasst:
- eine Thermostat-Betätigungselementanordnung (2),
- einen Nippel (3) zum Aufnehmen der Betätigungselementanordnung (2), welcher mit wenigstens einem Gewindeende (31) versehen ist,
- einen Griff (8), der sowohl in Drehung als auch axial integral mit dem Nippel (3) ausgebildet ist,
- einen Ausläufer (4), der an einem ersten Ende mit einem Gewinde versehen ist und schraubend mit dem Gewindeende des Nippels (3) am ersten Ende eingreift, welcher Kopplungsmittel zur Befestigung an einem Ventil aufweist,
- einen Synchronisierring (5), der in Drehung mit dem Ausläufer (4) und axial mit dem Griff (8) gekoppelt ist, wobei der Synchronisierring (5) durch die Drehung des Griffs (8) axial in Bezug auf den Ausläufer (4) beweglich ist,
wobei der Griff (8) ferner einen Öffnungsmund (82) und eine Außenwand (83) und eine Innenwand (84), die am Öffnungsmund (82) endet, aufweist, welche einen Aufnahmekanal (89) definieren,
**dadurch gekennzeichnet, dass** im Aufnahmekanal Folgendes bereitgestellt ist:
- erste Anschlagsflächen (85a, 85a'), die sich von der Außenwand (83) radial im Aufnahmekanal (89) erstrecken,
- zweite Anschlagsflächen (86a, 87a), die sich von der Innenwand (84) radial im Aufnahmekanal (89) erstrecken,
wobei der Synchronisierring (5) mit wenigstens einem Synchronisierzahn (52, 53) versehen ist, der dafür vorgesehen ist, zumindest mit den zweiten Anschlagsflächen (86a, 87a) abzuschließen, um Hubende-Winkelpositionen des Griffs (8) zu definieren,
und dass
der Kopf (1) ferner einen Begrenzungsring (6) aufweist, der in Drehung mit dem Synchronisierring (5) gekoppelt werden kann, indem der erstgenannte selektiv mit dem letztgenannten verbunden wird, wobei der Begrenzungsring (6) mit wenigstens zwei Begrenzungszähnen (62, 63) versehen ist, die, wenn der Begrenzungsring (6) mit dem Synchronisierring (5) verbunden ist, im Aufnahmekanal (89) aufgenommen sind und mit den ersten Anschlagsflächen (85a, 85a') abschließen sollen, um alternativ entweder Zwischenhub-Endpositionen des Griffs (8) oder einen Entriegelungszustand bei der Drehung des Griffs (8) zu bestimmen.

2. Thermostatkopf (1) nach Anspruch 1, wobei die ersten Anschlagsflächen (85a, 85a') auf entgegengesetzten Seiten eines ersten radialen Zahns (85) ausgebildet sind, der von der Außenwand (83) vorsteht.

3. Thermostatkopf (1) nach Anspruch 1 oder 2, wobei die zweiten Anschlagsflächen (86a, 87a) auf entgegengesetzten Seiten zweier radialer Zähne (86, 87) ausgebildet sind, die von der Innenwand (84) vorstehen.

4. Thermostatkopf (1) nach Anspruch 3, wobei der radiale Abstand zwischen dem ersten radialen Zahn (85) und der Innenwand (84) größer oder gleich der radialen Erstreckung des zweiten und/oder des dritten radialen Zahns (86, 87) ist und der radiale Abstand zwischen dem zweiten und/oder dem dritten radialen Zahn (86, 87) und der Außenwand (83) größer oder gleich der radialen Erstreckung des ersten radialen Zahns (85) ist.

5. Thermostatkopf (1) nach Anspruch 1, wobei die ersten Anschlagsflächen (85a, 85a') und die zweiten Anschlagsflächen (86a, 87a) an einem einzigen Vorsprung (100) ausgebildet sind, der sich im Kanal (89) erstreckt.

6. Thermostatkopf (1) nach einem oder mehreren der vorhergehenden Ansprüche, wobei der Nippel (3) ein zweites napfförmiges freies Ende (32) aufweist, in dessen Inneren zumindest ein Teil der Betätigungselementanordnung (2) aufgenommen ist.

7. Thermostatkopf (1) nach dem vorhergehenden Anspruch, wobei das napfförmige freie Ende (32) außen mit einem Eingriffsprofil versehen ist, das mit einem ähnlichen Eingriffsprofil innerhalb des Griff (8) zusammenwirkt, um für die Drehung und für die Verschiebung eine Formkopplung zu bilden.

8. Thermostatkopf (1) nach einem oder mehreren der Ansprüche 1 bis 4, wobei der Nippel (3) einstückig mit dem Griff (8) ausgebildet ist.

9. Thermostatkopf (1) nach einem oder mehreren der vorhergehenden Ansprüche, wobei der Ausläufer (4) ein zweites freies Ende (42) zur Kopplung mit dem thermostatisierbaren Ventil aufweist, wobei das erste Ende (41) mit einem Innengewinde versehen ist und dafür vorgesehen ist, mit dem Gewinde des ersten mit einem Gewinde versehenen freien Endes (31) des Nippels (3) zusammenzuwirken, um zu ermöglichen, dass der Nippel (3) und der Ausläufer (4) miteinander verschraubt/auseinander geschraubt werden.

10. Thermostatkopf (1) nach einem oder mehreren der vorhergehenden Ansprüche, wobei der Ausläufer (4) ferner erste Führungs-/Gleitprofile (43) aufweist und wobei der Synchronisierring (5) zweite Führungs-/Gleitprofile (56) aufweist, wobei die ersten und die zweiten Führungs/Gleitprofile (43, 56) geeignet sind, zusammenzuwirken, um eine axiale Verschiebung des Synchronisierrings (5) in Bezug auf den Ausläufer (4) zu führen.

11. Thermostatkopf (1) nach einem oder mehreren der vorhergehenden Ansprüche, wobei die Kopplungsmittel zum Befestigen an einem Ventil eine Ringmutter (7) und ein Eingriffsprofil am Ausläufer (4) zum Eingriff mit der Ringmutter aufweisen.

12. Thermostatkopf (1) nach einem oder mehreren der vorhergehenden Ansprüche, wobei der Synchronisierring (5) mit einer Umfangsrille (51) versehen ist und der Griff (8) mit einem entsprechenden Umfangsgrat versehen ist, um eine wechselseitige axiale Kopplung zu bewirken, wobei sich der Griff (8) frei in Bezug auf den Synchronisierring (5) drehen kann.

13. Thermostatkopf (1) nach einem oder mehreren der vorhergehenden Ansprüche, wobei der Synchronisierring (5) eine äußere Eingriffskrone (54) aufweist, die mit radialen Vertiefungen versehen ist, um in Drehung mit einem Begrenzungsring (6) einzugreifen, um eine Zentrierung des Begrenzungsrings (6) zu ermöglichen, wobei der Synchronisierring (5) ferner mit wenigstens einer Eingriffslippe (57) versehen ist, um den Begrenzungsring (6) entfernbar axial festzuhalten.

14. Thermostatkopf (1) nach einem oder mehreren der vorhergehenden Ansprüche, wobei die Thermostat-Betätigungselementanordnung (2) einen Thermostatsensor (21), vorzugsweise vom Fluidausdehnungstyp, eine erste Buchse (22), eine zweite Buchse (24), ein elastisches Element (23), vorzugsweise eine Schraubenfeder, die mit der ersten und der zweiten Buchse koppelt, aufweist, wobei die zweite Buchse (24) mit einem Stift (27) versehen ist, der dafür vorgesehen ist, mit einer Stößelsteuerung eines thermostatisierbaren Ventils zu koppeln, um die Strömung des Wärmeübertragungsfluids durch das Ventil selbst einzustellen.

## Revendications

1. Tête thermostatique (1) pour soupapes, comprenant :
- un ensemble actionneur thermostatique (2)
- un mamelon (3) destiné à recevoir l'ensemble actionneur (2), comportant au moins une extrémité filetée (31)
- une poignée (8) solidaire du mamelon (3) à la fois en rotation et axialement
- une queue (4) filetée à une première extrémité et en prise par vissage avec l'extrémité filetée du mamelon (3) à ladite première extrémité, comprenant des moyens de couplage pour une fixation à une soupape
- une bague de synchronisation (5) couplée en rotation à la queue (4) et axialement à la poignée (8), la bague de synchronisation (5) étant axialement mobile par rapport à la queue (4) en raison de la rotation de la poignée (8),
dans laquelle ladite poignée (8) comprend en outre une bouche ouverte (82) et une paroi externe (83) et une paroi interne (84) se terminant à ladite bouche ouverte (82), lesquelles définissent un canal de réception (89), **caractérisée par le fait que** ledit canal de réception comporte :
- des premières surfaces de butée (85a, 85a') s'étendant radialement dans ledit canal de réception (89) à partir de ladite paroi externe (83)
- des secondes surfaces de butée (86a, 87a) s'étendant radialement dans ledit canal de réception (89) à partir de ladite paroi interne (84),
ladite bague de synchronisation (5) comportant au moins une dent de synchronisation (52, 53) destinée à venir en butée avec au moins avec lesdites secondes surfaces de butée (86a, 87a) pour définir des positions angulaires de fin de course de la poignée (8)
et **par le fait que** la tête (1) comprend en outre une bague de limitation (6) apte à être couplée en rotation à ladite bague de synchronisation (5) par l'intermédiaire de sa liaison sélective sur cette dernière, ladite bague de limitation (6) comportant au moins deux dents de limitation (62, 63) qui, lorsque la bague de limitation (6) est reliée sur ladite bague de synchronisation (5), sont reçues dans ledit canal de réception (89) et sont destinées à venir en butée avec lesdites premières surfaces de butée (85a, 85a') pour déterminer de façon alternée soit des positions de fin de course intermédiaires de la poignée (8), soit une condition de verrouillage en rotation de la poignée (8).

2. Tête thermostatique (1) selon la revendication 1, dans laquelle lesdites premières surfaces de butée (85a, 85a') sont formées sur des côtés opposés d'une première dent radiale (85) faisant saillie à partir de ladite paroi externe (83).

3. Tête thermostatique (1) selon la revendication 1 ou 2, dans laquelle lesdites secondes surfaces de butée (86a, 87a) sont formées sur des côtés opposés de deux dents radiales (86, 87) faisant saillie à partir de ladite paroi interne (84).

4. Tête thermostatique (1) selon la revendication 3, dans laquelle une distance radiale entre la première dent radiale (85) et la paroi interne (84) est égale ou supérieure à l'étendue radiale de la deuxième et/ou troisième dent radiale (86, 87) et une distance radiale entre ladite deuxième et/ou troisième dent radiale (86, 87) et la paroi externe (83) est égale ou supérieure à l'étendue radiale de la première dent radiale (85).

5. Tête thermostatique (1) selon la revendication 1, dans laquelle lesdites premières surfaces de butée (85a, 85a') et lesdites secondes surfaces de butée (86a, 87a) sont formées sur une seule saillie (100) s'étendant dans ledit canal (89).

6. Tête thermostatique (1) selon une ou plusieurs des revendications précédentes, dans laquelle le mamelon (3) comprend une seconde extrémité libre en forme de coupelle (32) dans laquelle au moins une partie dudit ensemble actionneur (2) est reçue intérieurement.

7. Tête thermostatique (1) selon la revendication précédente, dans laquelle ladite extrémité libre en forme de coupelle (32) comporte extérieurement un profil de prise coopérant avec un profil de prise similaire à l'intérieur de la poignée (8) pour former un couplage de forme pour la rotation et pour la translation.

8. Tête thermostatique (1) selon une ou plusieurs des revendications 1 à 4, dans laquelle le mamelon (3) est d'un seul tenant avec ladite poignée (8).

9. Tête thermostatique (1) selon une ou plusieurs des revendications précédentes, dans laquelle ladite queue (4) comprend une seconde extrémité libre (42) destinée à se coupler à la soupape thermostable, ladite première extrémité (41) étant filetée intérieurement et destinée à coopérer avec le filetage de la première extrémité libre filetée (31) du mamelon (3) pour permettre au mamelon (3) et à la queue (4) de se visser/dévisser l'un par rapport à l'autre.

10. Tête thermostatique (1) selon une ou plusieurs des revendications précédentes, dans laquelle ladite queue (4) comprend en outre des premiers profils de guidage/glissement (43) et dans laquelle ladite bague de synchronisation (5) comprend des seconds profils de guidage/glissement (56), lesdits premiers et seconds profils de guidage/glissement (43, 56) étant appropriés pour coopérer entre eux pour guider une translation axiale de ladite bague de synchronisation (5) par rapport à ladite queue (4).

11. Tête thermostatique (1) selon une ou plusieurs des revendications précédentes, dans laquelle lesdits moyens de couplage pour une fixation à une soupape comprennent un écrou de blocage (7) et un profil de prise sur ladite queue (4) pour une prise avec ledit écrou de blocage.

12. Tête thermostatique (1) selon une ou plusieurs des revendications précédentes, dans laquelle ladite bague de synchronisation (5) comporte une gorge circonférentielle (51) et ladite poignée (8) comporte une nervure circonférentielle correspondante pour un couplage axial mutuel, ladite poignée (8) étant libre de tourner par rapport à la bague de synchronisation (5).

13. Tête thermostatique (1) selon une ou plusieurs des revendications précédentes, dans laquelle ladite bague de synchronisation (5) comprend une couronne de prise externe (54) comportant des renfoncements radiaux pour être mise en prise en rotation avec une bague de limitation (6), pour permettre un centrage de ladite bague de limitation (6), ladite bague de synchronisation (5) comportant en outre au moins une lèvre de prise (57) pour retenir de façon amovible et axiale la bague de limitation (6).

14. Tête thermostatique (1) selon une ou plusieurs des revendications précédentes, dans laquelle ledit ensemble actionneur thermostatique (2) comprend un capteur thermostatique (21), de préférence du type à dilatation de fluide, une première douille (22), une seconde douille (24), un élément élastique (23), de préférence un ressort hélicoïdal, couplant lesdites première et seconde douilles, ladite seconde douille (24) comportant une broche (27) destinée à se coupler à une commande de porte-clapet d'une soupape thermostable pour ajuster un écoulement de fluide de transfert de chaleur à travers la soupape elle-même.
